Europäisches Patentamt

(19) **European Patent Office**

Office européen des brevets

(11) Numéro de publication: **0 043 754**
**B1**

## FASCICULE DE BREVET EUROPEEN

(45) Date de publication du fascicule du brevet:
**29.08.84**

(51) Int. Cl.³: **F 16 C 32/06**

(21) Numéro de dépôt: **81401022.9**

(22) Date de dépôt: **25.06.81**

(54) **Palier hydrostatique à manchon tournant.**

(30) Priorité: **07.07.80 FR 8015046**

(43) Date de publication de la demande:
**13.01.82 Bulletin 82/2**

(45) Mention de la délivrance du brevet:
**29.08.84 Bulletin 84/35**

(84) Etats contractants désignés:
**BE CH DE FR GB IT LI NL SE**

(56) Documents cités:
**FR - A - 911 204**
**FR - A - 2 048 929**
**GB - A - 1 233 176**
**US - A - 3 902 771**

(73) Titulaire: **JEUMONT-SCHNEIDER Société anonyme dite:, 31-32, Quai de Dion Bouton, F-92811 Puteaux Cedex (FR)**

(72) Inventeur: **Drevet, Michel, 65, Boulevard des Belges, F-69008 Lyon (FR)**
Inventeur: **Trouillet, Jean, 1, Place Desoil, B-6540 Fontaine-Valmont (BE)**

(74) Mandataire: **Lejet, Christian, 31-32, Quai de Dion Bouton, F-92811 Puteaux Cedex (FR)**

BUNDESDRUCKEREI BERLIN

## Description

La présente invention concerne les paliers hydrostatiques alimentés en fluide sous pression pour un arbre tournant à grande vitesse dans un bâti fixe.

D'une manière générale, de tels paliers comprennent un coussinet réalisé dans un matériau résistant à l'usure, et solidaire du bâti supportant l'arbre, coussinet dans lequel des alvéoles alimentés en fluide sous pression sont ménagés de manière à créer une pellicule de fluide entre le tourillon de l'arbre et le coussinet et ainsi réduire la friction.

Au contact de l'arbre, le fluide d'alimentation subit un cisaillement lors de la rotation de l'arbre, dissipant ainsi une puissance importante. Cette dernière est sensiblement proportionnelle à la puissance trois de la vitesse de rotation de l'arbre.

Le document FR-A-2 048 929 décrit un palier à coussin pneumatique de petite dimension pour arbre tournant à très grande vitesse (jusqu'à 100 000 tours/mm) dans un bâti fixe et destiné à atténuer les phénomènes de turbulence à ces grandes vitesses. Ce palier comporte un manchon tournant disposé coaxialement à l'arbre dans une chambre ménagée entre l'arbre et le bâti. Ce manchon intermédiaire est mis en rotation par l'effet de turbine obtenu au moyen de trous obliques placés dans le manchon.

Or, ce palier n'aurait sensiblement aucun effet avec un manchon de grand diamètre et un arbre tournant à une vitesse de l'ordre de 1500 tours/mm.

Ce manchon, en outre, est prévu pour réduire les phénomènes de turbulence.

La présente invention a pour but de réduire la puissance dissipée par cisaillement du fluide dans un tel palier au moyen d'un manchon tournant.

Selon l'invention, un manchon est disposé coaxialement à l'arbre dans une chambre ménagée entre le bâti et l'arbre, des alvéoles alimentés en fluide étant respectivement ménagés dans l'arbre et dans le bâti en regard et de part et d'autre du manchon, de telle manière qu'un mouvement de rotation autour de son axe puisse être imprimé au manchon.

Selon un mode préféré de réalisation de l'invention, la face interne du manchon est cylindrique, deux séries d'alvéoles alimentés en fluide sous pression étant ménagées dans l'arbre en regard du manchon, entre lesquels un alvéole additionnel est également ménagé pour l'échappement du fluide, tandis que la face externe du manchon affecte une forme partiellement sphérique, l'alvéole ménagé dans le bâti en regard affectant une forme partiellement complémentaire, de manière à permettre la correction automatique de tout mésalignement de l'arbre.

Selon une variante de réalisation, des moyens tels que roues dentées et pignons sont prévus pour entraîner en rotation le manchon autour de son axe notamment à une vitesse angulaire sensiblement égale à la moitié de celle de l'arbre.

L'invention sera mieux comprise et d'autres buts, avantages et caractéristiques apparaîtront plus clairement à la lecture de la description qui suit de divers modes de réalisation de l'invention donnés à titre non limitatif, description à laquelle trois planches de dessin sont annexées.

La fig. 1 représente en demi-coupe axiale un palier conforme à la présente invention.

La fig. 2 représente, également en demi-coupe axiale une variante d'un palier hydrostatique conforme à la présente invention, et les fig. 3a et 3b représentent schématiquement, respectivement en coupes axiale et radiale un mode d'entraînement du manchon inclus dans un palier hydrostatique conforme à la présente invention.

On sait que la puissance P dissipée par cisaillement du fluide dans un palier hydrostatique peut être très importante. Par exemple, pour un arbre tournant à 1500 tours par minute dans un palier de 0,90 mètre de diamètre alimenté en eau à 20°C, la puissance dissipée par le cisaillement du fluide est supérieure à 100 kW.

En doublant les surfaces efficaces au moyen d'un manchon auquel est imprimée une vitesse de rotation égale à la moitié de celle de l'arbre, et dans les mêmes conditions d'expérience, la puissance dissipée par cisaillement du fluide est réduite de 70% environ et se situe à 30 kW environ.

On constate en outre une augmentation de 15 à 20% de la raideur de l'arbre dans ce dernier cas.

En référence maintenant aux figures représentant divers modes de réalisation de l'invention appliqués au guidage de l'arbre vertical d'une pompe à fluide, l'arbre 1 entraîne en rotation une roue à aubes 2; un bâti fixe 3 permet de définir un espace 4 dans lequel circule le fluide pompé sous pression qui va alimenter les alvéoles du palier.

Un manchon 5 est disposé coaxialement à l'arbre 1 dans une chambre ménagée à cet effet entre le bâti 3 et l'arbre 1, et des alvéoles sont ménagés dans les parois en regard du manchon, c'est-à-dire dans l'arbre 1 et dans le bâti 3.

Ces alvéoles sont alimentés en fluide sous pression au moyen de gicleurs 6, 7 reliés à l'espace 4 par des conduits 8, 9. Des chambres de basse pression 10, 11, 12, permettent d'assurer l'échappement du fluide vers un conduit 13 relié à la partie basse pression de la pompe.

Dans l'exemple représenté, l'arbre de la pompe est vertical et un palier de butée à effet axial est nécessaire pour assurer la sustentation du manchon 5.

Un alvéole complémentaire 14 est donc relié à l'espace 4 à haute pression au moyen d'un conduit 15, les chambres de basse pression 11 et 12 permettant d'assurer l'échappement du fluide introduit par l'alvéole 14.

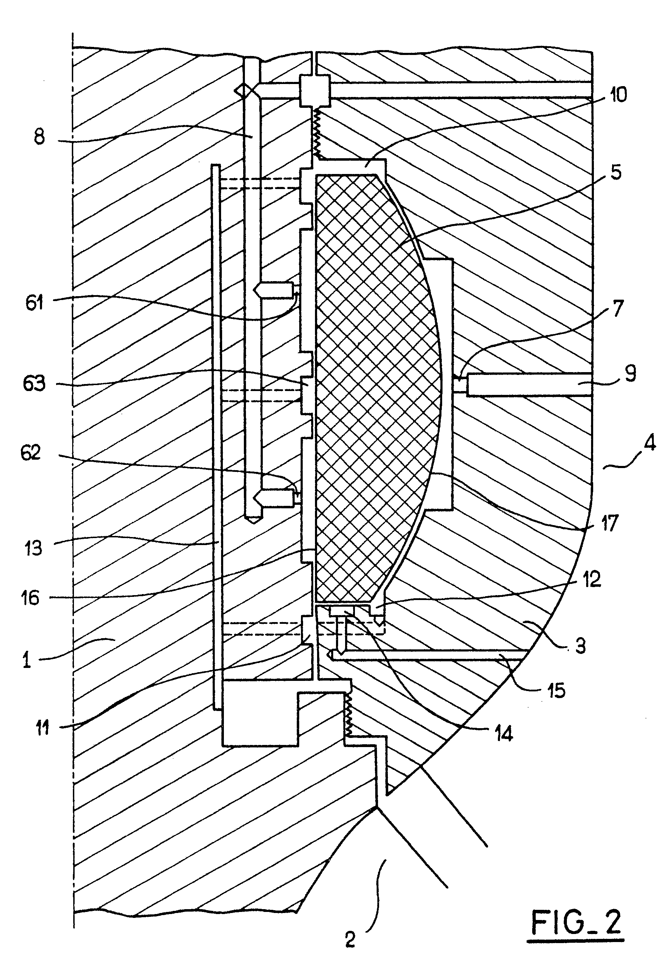

La variante de réalisation représentée fig. 2 permet de corriger, en plus, un mésalignement accidentel de l'arbre.

La face interne 16 du manchon 5 est cylindrique tandis que la face externe 17 affecte une forme sphérique. De ce fait l'alvéole correspondant ménagé dans le bâti affecte une forme partiellement correspondante pour donner un degré de liberté supplémentaire au manchon 5.

Pour corriger les mésalignements, deux alvéoles doivent être ménagés dans l'arbre, et alimentés en fluide sous pression par les gicleurs 61, 62 reliés par l'intermédiaire du conduit 8 à l'espace 4 sous pression. En outre, une chambre de détente 63 doit être ménagée entre les deux alvéoles de manière à assurer l'échappement du fluide vers le conduit 13.

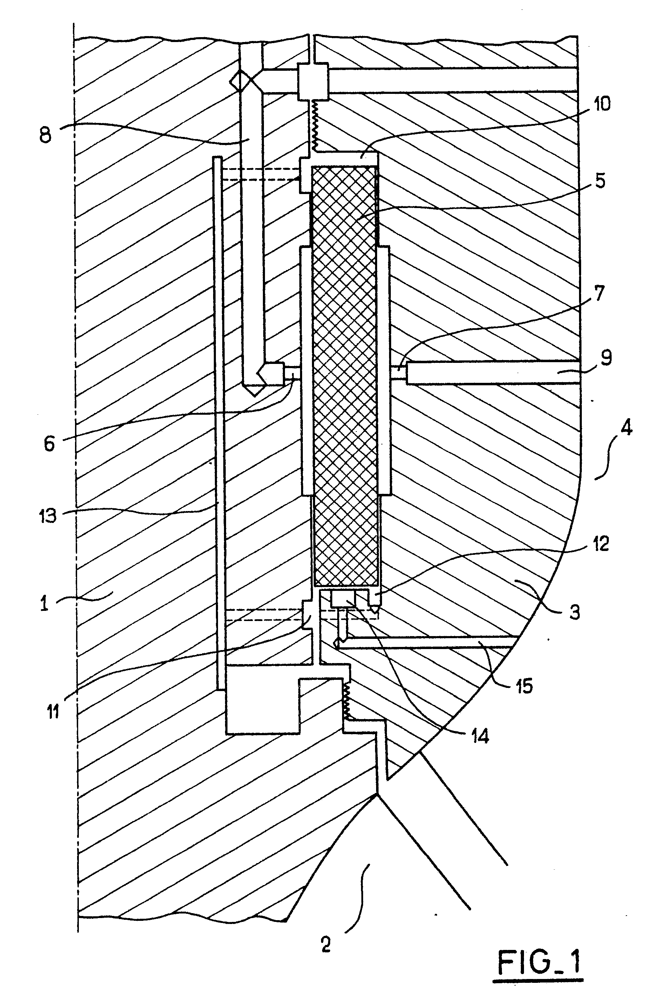

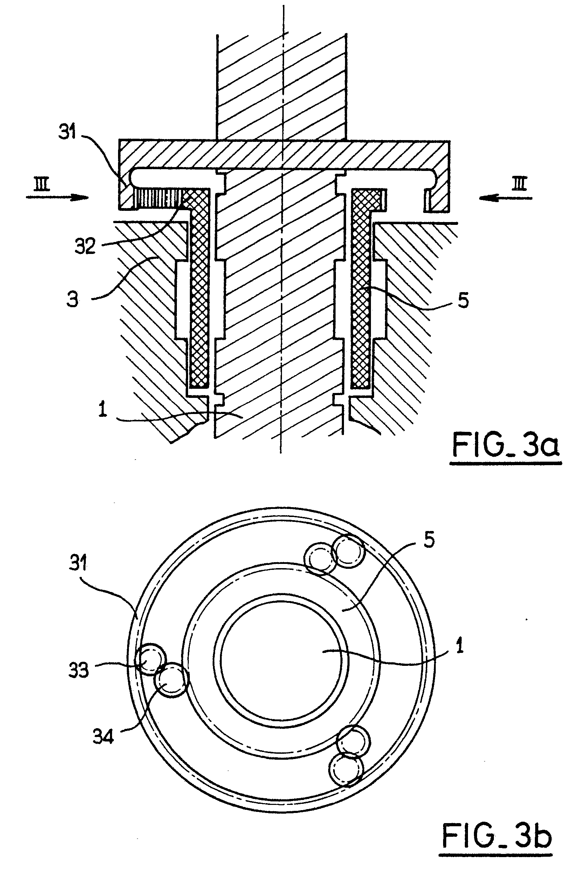

Dans les exemples représentés fig. 1 et 2, le manchon est libre en rotation, son mouvement lui étant imprimé par les frottements du fluide sur ses parois. Toutefois, il peut être nécessaire d'obliger le manchon 5 à avoir une vitesse de rotation déterminée, notamment une vitesse de rotation égale à la moitié de celle de l'arbre 1, comme représenté fig. 3a et 3b. Les moyens requis peuvent être avantageusement constitués par la combinaison d'une roue dentée 31 solidaire de l'arbre 1, d'une autre roue dentée 32 solidaire du manchon 5, ces deux roues étant concentriques, une pluralité de pignons 33, 34 transmettant le mouvement de rotation de la roue 31 à la roue 32, avec un rapport de transformation déterminé, et constituant, par exemple, un réducteur de vitesse.

Bien que seuls certains modes de réalisation de l'invention aient été décrits, il est évident que le manchon 5 peut être entraîné en rotation par tout autre moyen, par exemple au moyen d'un moteur auxiliaire.

## Revendications

1. Palier hydrostatique à fluide sous pression pour arbre tournant à grande vitesse dans un bâti fixe, caractérisé en ce qu'un manchon (5) est disposé coaxialement au dit arbre (1) dans une chambre ménagée à cet effet entre le dit bâti (3) et le dit arbre, des alvéoles alimentés en fluide étant respectivement ménagés dans le dit arbre (1) et dans le dit bâti (3), en regard et de part et d'autre du dit manchon (5), de telle manière qu'un mouvement de rotation autour de son axe puisse être imprimé au dit manchon.

2. Palier selon la revendication 1 caractérisé en ce que la face interne (16) du dit manchon (5) est cylindrique, deux séries d'alvéoles alimentés en fluide étant ménagées dans l'arbre en regard du dit manchon, entre lesquels un alvéole additionnel est également ménagé pour l'échappement du fluide, tandis que la face externe (17) du dit manchon affecte une forme partiellement sphérique, l'alvéole ménagé dans le bâti en regard affectant une forme partiellement complémentaire.

3. Palier selon l'une quelconque des revendications 1 et 2 caractérisé en ce que, le dit arbre étant vertical, un alvéole est ménagé dans le dit bâti à la base du dit manchon de manière à assurer la sustentation de ce dernier.

4. Palier selon l'une quelconque des revendications 1 à 3 caractérisé en ce que des moyens additionnels sont prévus pour entraîner en rotation le dit manchon autour de son axe.

5. Palier selon la revendication 4 caractérisé en ce que le dit manchon est pourvu d'une roue dentée (32) concentrique d'une roue dentée (31) solidaire du dit arbre, une pluralité de pignons (33, 34) coopérant avec les dites roues de manière à imprimer un mouvement de rotation au manchon lors de la rotation du dit arbre.

6. Palier selon la revendication 5 caractérisé en ce que les dits pignons (33, 34) sont disposés de manière à constituer un réducteur de vitesse.

## Patentansprüche

1. Hydrostatisches Lager mit einem unter Druck stehenden Fluid für eine mit hoher Geschwindigkeit in einem feststehenden Maschinenrahmen rotierende Welle, dadurch gekennzeichnet, daß eine Hülse (5) koaxial zu der Welle (1) in einer Kammer angeordnet ist, die zu diesem Zweck zwischen dem Maschinenrahmen (3) und der Welle angeordnet ist, wobei mit Fluid gespeiste Hohlräume jeweils in der Welle (1) und in dem Maschinenrahmen (3) gegenüber der Hülse (5) und auf beiden Seiten derselben derart angeordnet sind, daß der Hülse eine Drehbewegung um ihre Achse aufgeprägt werden kann.

2. Lager nach Anspruch 1, dadurch gekennzeichnet, daß die Innenfläche (16) der Hülse (5) zylindrisch ist, wobei zwei mit Fluid gespeiste Reihen von Hohlräumen in der Welle gegenüber der Hülse angebracht sind, zwischen denen ferner ein zusätzlicher Hohlraum zum Abströmen des Fluids angebracht ist, während die Außenfläche (17) der Hülse eine teilweise kugelförmige Gestalt aufweist und der in dem Maschinenrahmen gegenüber angebrachte Hohlraum eine teilweise komplementäre Gestalt aufweist.

3. Lager nach Anspruch 1 oder 2, dadurch gekennzeichnet, daß bei vertikaler Anordnung der Welle ein Hohlraum in dem Maschinenrahmen am Fuß der Hülse so angebracht ist, daß er den Schwebezustand derselben gewährleistet.

4. Lager nach einem der Ansprüche 1 bis 3, dadurch gekennzeichnet, daß zusätzliche Mittel vorgesehen sind, um die Hülse in eine Drehbewegung um ihre Achse zu versetzen.

5. Lager nach Anspruch 4, dadurch gekennzeichnet, daß die Hülse mit einem Zahnrad (32) versehen ist, welches konzentrisch zu einem mit der Welle fest verbundenen Zahnrad (31) ist, wobei eine Mehrzahl von Ritzeln (33, 34) mit diesen Rädern derart zusammenwirken, daß sie der Hülse während der Drehbewegung der Welle eine Drehbewegung aufprägen.

6. Lager nach Anspruch 5, dadurch gekennzeichnet, daß die Ritzel (33, 34) derart angeordnet sind, daß sie ein Untersetzungsgetriebe bilden.

## Claims

1. Hydrostatic bearing using pressure fluid, for a shaft rotating at high speed in a fixed frame, characterised in that a bush (5) is arranged coaxially with the said shaft (1) in a chamber formed for this purpose between the said frame (3) and the said shaft, recesses supplied with fluid being arranged respectively in the said shaft (1) and in the said frame (3), opposite and at both sides of the said bush (5), in such a manner that a rotational movement about its axis can be imparted to the said bush.

2. Bearing according to claim 1, characterised in that the internal face (16) of the said bush (5) is cylindrical, two series of recesses supplied with fluid being arranged in the shaft opposite the said bush, between which an additional recess is also arranged for the discharge of the fluid, whereas the external face (17) of the said bush has a partly spherical shape, the recess arranged in the frame opposite being given a partly complementary form.

3. Bearing according to any one of claims 1 and 2, characterised in that, with the said shaft in a vertical situation, a recess is arranged in the said frame at the base of the said bush, in such a manner as to provide support for the latter.

4. Bearing according to any one of claims 1 to 3, characterised in that additional means are provided for driving the said bush in rotational movement about its axis.

5. Bearing according to claim 4, characterised in that the said bush is provided with a toothed wheel (32) concentric with a toothed wheel (31) fast with the said shaft, a plurality of pinions (33, 34) co-operating with the said wheels so as to impart a rotational movement to the bush when the said shaft rotates.

6. Bearing according to claim 5, characterised in that the said pinions (33, 34) are arranged so as to constitute a speed reduction gearing.

FIG_1

FIG_2

FIG_3a

FIG_3b